# EUROPEAN PATENT APPLICATION

(11) **EP 1 028 571 A1**
(43) Date of publication of application: **16.08.2000**
(21) Application number: 99440026.5
(22) Date of filing: 12.02.1999
(51) Int. Cl.: H04M 1/00, G06F 3/023, H04M 1/274

(54) **Method of entering a subscriber number**

(71) Applicant: ALCATEL, 75008 Paris (FR)
(72) Inventor: Gadeau, Jean-Yves, 67400 Ilkirch (FR); Vaudrey, Denis, 67380 Lingolsheim (FR)
(74) Representative: Rausch, Gabriele, Dr.

(57) **Abstract**

Normally, in telephony, a subscriber number is entered using a keypad.

In the new method of entering a subscriber number in a menu-driven telephone (F), the digits available are displayed on a display device (S) of the telephone as a menu. By moving a marker (M) in the menu by means of activating a control element (BE), the digits of the subscriber number to be entered are first sequentially marked and then selected each by activating a selection key. In a telephone operated by this method, there is therefore no need of a keypad.

## Description

The invention relates to a method of entering a subscriber number in accordance with the preamble of claim 1 and a menu driven telephone in accordance with the preamble of claim 3.

In telephony, the entry of a subscriber number is generally carried out using a numerical keypad. Telephones are also known, particularly one-piece radio telephones, which have menu control. A menu control is known from the patent specification US 5,758,295 in which a marker is moved by means of entry keys in a menu which is displayed on a telephone display device. The marked menu point can additionally be selected by means of a confirmation key. In this way, entries can be selected from a phone book, special telephone functions can be activated or pre-settings can be changed. The entry of a subscriber number is, however, carried out using a numerical keypad, i.e. using its own keypad intended for that purpose.

As an alternative to entering a subscriber number using a numerical keypad, phones are also known, such as car phones, for example, where subscriber numbers can be entered by means of voice. A user slowly and clearly reads out the digits of the subscriber number one after the other. The digits read out are recognised in the telephone by means of voice recognition and combined to form the subscriber number. This procedure is, however, liable to errors and technically laborious.

Telephones, and in particular one-piece radio telephones, are becoming even smaller. In addition, there is a desire for a larger display device so that the telephone can be equipped with more features; and can display more information such as text messages, e-mails or connection parameters clearly and legibly.

It is an object of the invention to provide an alternative method for entering subscriber numbers. An additional object of the invention is to provide a menu driven telephone in which the subscriber number can be entered in a way which differs from the usual numerical keypad used previously.

The object is achieved with regard to the method by the features of claim 1 and with regard to the telephone by the features of claim 3. Advantageous embodiments can be found in the dependent claims.

A particular advantage of the invention is that a numerical keypad can be dispensed with completely. In this way, telephones can be made smaller than previously. On the other hand, the space previously required for the numerical keypad on the front of the phone can be used for a larger display device. An additional advantage is that in entering a subscriber number, the user no longer has to take his eyes from the display device in order to find the correct digits with his finger. The operation of the telephone is therefore very intuitive for the user.

In the following, the invention is explained in an embodiment using figures 1 to 5. They show the following:
- Figure 1:: a menu driven one-piece radio telephone in accordance with the invention;
- Figures 2a to c:: examples of a menu displayed on the telephone display device from Figure 1;
- Figures 3a to h:: the entry of a subscriber number in accordance with the invention procedure using the telephone shown in Figure 1;
- Figure 4:: a flow chart of the invention method; and
- Figures 5a to d:: the re-dial feature of the telephone from figure 1.

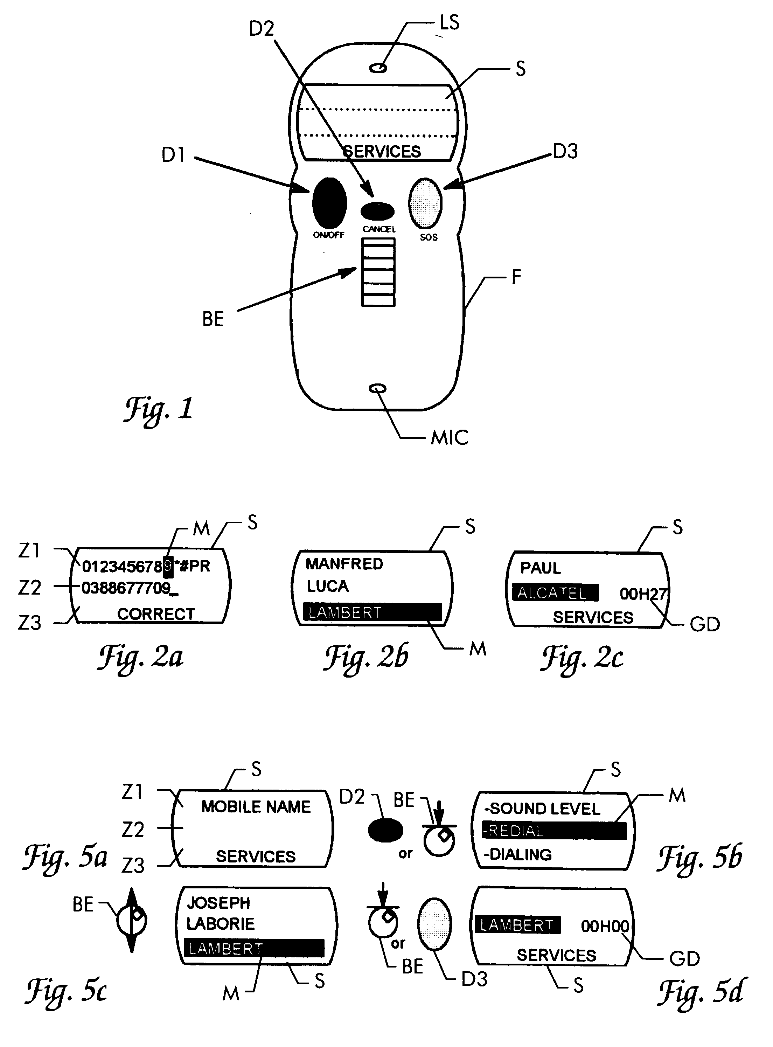

The one-piece radio telephone F shown in Figure 1 has a control element BE, a display device S on which a menu can be displayed and three pushbuttons D1, D2 and D3. The display device can be an LCD display, for example. Using the first push button D1, the telephone is switched on or a call ended. Using the second push-button D2, the stand-by display can be switched to the menu, e.g. a telephone book or a service menu. The second push-button, however, also has other meanings assigned to it. This will be displayed in the menu. Using the third push-button, a call can be answered and a subscriber number transmitted to set up the call. The microphone MIC and the loud speaker LS of the radio telephone F are also shown in Figure 1.

The control element BE is an endless band tensioned over two rollers. To move the marker M in the menu, the band is moved up or down. There is a selection key integrated between the two rollers below the band so that by pressing on the band, the current marked menu item can be selected. This integrated structure of the control element is particularly advantageous as it permits fast and intuitive operation and selection without the user having to take his eyes from the display device or having to search with his fingers for a corresponding selection key.

The radio telephone F does not have a numerical keypad for entering the subscriber numbers. The subscriber numbers are entered by means of the control element BE. The control element and the selection key integrated into it consequently represent the only means of entering the subscriber numbers. To enter a subscriber number, on first activating the control element BE, a menu with the individual digits available is brought up into the display device. By moving the flexible band, a marker is moved over the digits displayed. When the desired digit is marked, this can then be selected by pressing on the control element BE by means of the integrated selection key. By the repeated selection of digits as described earlier, the complete desired subscriber number is entered in stages. Thus there is no need for a numerical keypad. The radio telephone can therefore be designed smaller and the space saved on the front of the radio telephone can be used for a larger display device.

A push-button located below the flexible band of the control element is not absolutely necessary. A selection of the marked menu item can be carried out, for example, by pressing key D3. Other control elements are possible, such as a track ball, a track point, a wheel which can be turned or individual cursor keys. It is also not essential to omit a numerical keypad. Such a numerical keypad can also be provided as an alternative means of entry.

Possible menus which can be displayed by the display device S are shown in Figures 2a to 2c. In these, Figure 2a shows the display device when a number is being entered. In the upper line Z1, the menu is displayed with the individual digits and characters which can be selected; these are the digits '1', '2', '3', '4', '5', '6', '7', '8', '9' and '0', the characters '*' and '#' as well as 'P' for a pause in the dialling and 'R' which has a function similar to a groud key. By selecting 'R' from the dial menu, a current call is interrupted to initiate a conference ciruit, to connect a third subscriber for forwarding the current call, or to initiate further functions of a private branch exchange. In the second line Z2, the call is number is shown as long as it is already entered. In the third line Z3, the entry "CORRECT" is displayed which shows the current meaning of the second push-button D2. By pressing the push-button D2, the last selected digit is deleted. The marker M is also displayed and in the example shown is on the digit "9".

In Figure 2b, the telephone directory with several entries is shown. By means of the control element, the marker M can be moved in the telephone directory and one of the entries can be selected. In Figure 2c, the content of the display after the selection of a telephone book entry and the successful call set-up is shown. The duration GD of the call is shown on the right hand end of the middle line Z2. In the lower line Z3, the entry "SERVICES" is displayed. Again it gives the current meaning of the second push-button D2. By pressing the push-button D2, one can switch to a services menu in order to set up a conference circuit, for example.

The content of the display device in the individual stages of the subscriber number entry is shown in Figures 3a to h. Next to the Figures are shown symbols of the activation of the control element BE or the push-button required for the respective stage.

Figure 3a shows the display device in normal mode. This menu is described as the stand-by menu. The radio telephone is switched on and ready to receive. In the first line Z1 of the display appears a name which the user can assign freely. By moving the control element up or down, the selection menu shown in Figure 3b is activated. The movement up or down of the control element is symbolically indicated by a double arrow. In the first line Z1 of the display, a list of available digits and characters is displayed in what was described as the selection menu in Figure 2a. The second line Z2 is still clear as no digits of a subscriber number have yet been entered. In the third line, the entry "CORRECT" is displayed during the entry of the subscriber number. This describes the current meaning of the push-button D2 and means that by pressing the push-button D2 the last selected digit will be deleted.

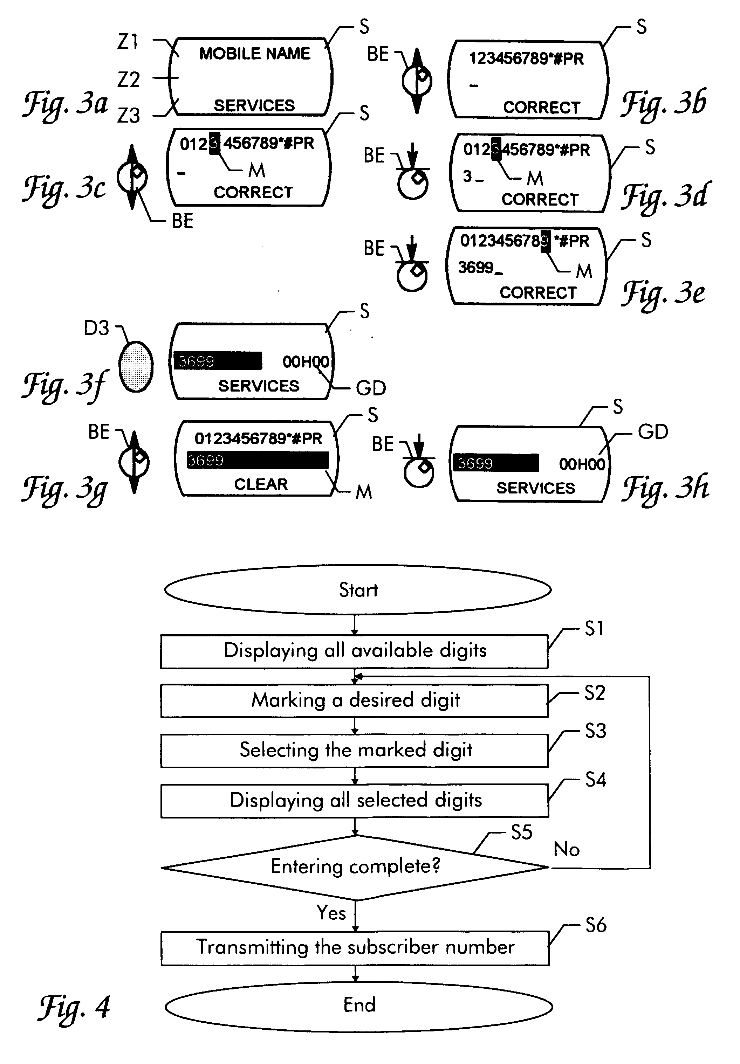

By continued movement of the control element BE, the marker M is moved through the menu. In Figure 3c, the marker M is right on the digit "3". By pressing on the selection key integrated into the control element, the current marked digit is selected. In Figure 3d, the action of pressing on the control element BE is indicated by an arrow pointing downwards onto a dash. In this way, the selected digit "3" appears as the first digit of the subscriber number to be entered in line Z2 of the display.

In this way, the individual digits of the subscriber number are entered in stages. In Figure 3e, the subscriber number "3699" was entered. The last digit selected by pressing on the selection key was the "9". Therefore the digit "9" is still marked in the first line of the selection menu.

After the successful input of the subscriber number, this must be transmitted to an exchange or a private branch exchange so that a connection corresponding to the subscriber number can be established. The transmission of the subscriber number can be initiated as shown in Figure 3f by pressing on the push-button D3. If the connection is established as shown in Figure 3f, then the duration GD of the call appears on the right hand edge of the second line Z2 of the display S. The dialed subscriber number is also shown in the second line Z2.

Alternatively, the transmission of the subscriber number entered can also be initiated by moving the marker M in the selection menu onto the entered subscriber number using the control element. This happens by the marker being moved to a position over the last character "R" displayed in the first line. In this way, as shown in Figure 3g, the whole entered subscriber number is marked. If the subscriber number is marked, then in the third line the menu point "CLEAR" appears. This means that by pressing the push-button D2, the marked subscriber number can be deleted. In Figure 3h it can then be seen that by then pressing on the selection key, the subscriber number will be transmitted and the corresponding call will be set up. On the right hand edge of the line Z2, the duration GD of the call appears. This embodiment is advantageous, on the one hand because the user only has to activate the integrated control element which he has his finger on anyway, and on the other hand as there is no longer any need for a special push-button for sending the subscriber number.

In the telephone it is also advantageous to have means for entering an alphanumeric text, for example, a text message or an e-mail. Entry in this case is analogous to the entry of subscriber numbers. By selecting a corresponding menu item in the service menu, a list of the available letters, characters and digits is displayed. By activating the control element, a marker can be moved in the list in order to mark characters one at a time and to select them by pressing the integrated selection key. In this way even new name entries, for example, can be entered into the telephone book.

A particularly advantageous design of the telephone in accordance with the invention also has buffer storage. The buffer storage holds the last dialed subscriber number, the subscriber number of the last edited entry of the phonebook, or the subscriber number of the last caller. If a new telephone book entry is now created in which a name is entered as described above, then the stored number appears on the display device as a new optional subscriber number for the new entry. The user can either confirm the buffer-stored subscriber number by pressing the selection key or he can enter a new subscriber number. In this way, new entries can be created particularly quickly and easily. Thus it is possible, for example, to select and delete a telephone book entry. As the subscriber number of the deleted telephone book entry is stored in buffer storage on deletion, it appears as an optional standard on entering a new entry in the telephone book. A caller's subscriber number too can be entered just as quickly and easily in the telephone book, because after ending an accepted call only the name of the caller has to be entered as a new entry and the subscriber number of the caller offered from buffer storage as an optional standard has to be confirmed.

In an advantageous further embodiment of the invention there are additionally one or more name keys. Such name keys serve to carry out an abbreviated dialing. By just pushing the name key, a subscriber number assigned with the name key is dialed. In Figure 1, the push-button D3 is used as a name key for an emergency number. The assignment of the subscriber number or the emergency number to the name key is made by the name key being kept pressed down for a certain period of time such as two seconds. The current subscriber number contained in the display or in buffer storage is then allocated to the name key.

Figure 4 shows a flow chart of the invention procedure. It contains the following steps:
- Step S1:: A menu is displayed on the display device comprising all the available digits and characters.
- Step S2:: By means of the control element, a marker is moved in the menu until a desired digit (or character) is marked.
- Step S3:: By pressing the selection key, the marked digit (or character) is selected.
- Step S4:: The selected digit is displayed in an entry line of the display device together with the previously selected digits.
- Step S5:: Steps S2 to S4 are repeated until all digits of the number to be entered are entered.
- Step S6:: The subscriber number is transmitted by activating a push-button for this purpose or marked by activating the control element and transmitted by pressing the integrated selection key.

In an additional advantageous further embodiment of the invention, the telephone also has a re-dial memory in which several previously entered subscriber numbers or subscriber numbers from previous callers are automatically stored. The re-dial memory can be called up as a sub-menu in the service menu. If the sub-menu item for the re-dial memory is selected then a list of the stored subscriber numbers or the names of correspondents stored in the telephone book is displayed. By activating the control element, a marker can be moved in the list and by pressing the selection button, the marked entry can be selected and transmission of its subscriber number is initiated to set up a corresponding connection. This is shown in Figures 5a to d. Figure 5a shows the stand-by menu. The third line Z3 of the display shows the menu point "SERVICES". This establishes the function of the second push-button D2 (Figure 1). By pressing the second push-button or alternatively by pressing the selection key integrated into the control element, the service menu is activated. By activating the control element, one can leaf through the service menu and the marker set to the menu item "-REDIAL", as shown in Figure 5b. By pressing the selection key, the marked menu item is activated and the sub-menu displayed with the content of the re-dial memory (Figure 5c). By activating the control element, the marker M is placed on a desired caller name as shown in Figure 5c. In the example presented, this is the caller name "LAMBERT". By pressing the selection key or by pressing the push-button D3, the re-dial of the marked entry is initiated and its subscriber number transmitted. If a corresponding call is set up, then this appears on the display as in Figure 5d with the current call duration GD.

## Claims

1. Method of entering a subscriber number in a menu driven telephone (F),
**characterised in that**
the available digits are displayed as a menu on a display device (S) on the telephone (F) and the digits of a subscriber number to be entered are first marked appropriately by moving a marker (M) in the menu by activating a control element (BE) and then are selected by activating a selection key.

2. The method of claim 1 in which the subscriber number to be entered is displayed in an entry line (Z2) of the menu and in which after a successful entry of the subscriber number, the subscriber number is marked by means of the control element (BE) and is selected by means of the selection key, whereby the subscriber number is transmitted to establish a connection corresponding to the subscriber number.

3. Menu driven telephone (F) comprising a display device (S) on which a menu is displayed and a control element (BE) for moving a marker (M) in the menu,
**characterised by**
means for displaying available digits in the menu; and by means for sequentially selecting digits from the menu for the purpose of entering a subscriber number by marking a respective digit using the control element (BE) to move the marker (M) and by then activating appropriately a selection key for selecting the marked digit.

4. The telephone of claim 3, in which the control element (BE) and the selection key are the only means provided for entering a subscriber number.

5. The telephone of claim 3 in which the selection key is integrated in the control element (BE) so that by an approximate lateral movement of the control element (BE) a menu point is able to be marked and by pressing on the control element the marked menu point can be selected.

6. The telephone of claim 3 comprising means for entering an alphanumeric text by the repeated marking and selecting of characters from a list of available alphanumeric characters displayed in a menu.

7. The telephone of claim 3 comprising a buffer storage for storing the last dialed or edited subscriber number and/or for storing the subscriber number of the last caller; means for storing and displaying a telephone directory; and means for entering a new entry in the telephone book whereby after entering a name for the new entry, the subscriber number stored in buffer storage is displayed as an optional subscriber number for the new entry and by confirmation can be allocated to the new entry.

8. The telephone of claim 3 comprising at least one name key (D3) for abbreviated dialing; and means for allocating a current displayed subscriber number, a current displayed telephone directory entry or a subscriber number stored in buffer storage to the name key (D3) by continuous pressing on the name key.

9. The telephone of claim 3 comprising a re-dial memory for storing several subscriber numbers dialed earlier and/or subscriber numbers of earlier callers; means for displaying the subscriber numbers stored in the re-dial memory in the form of a sub-menu; and means for selecting one of the subscriber numbers displayed in the sub-menu for activating the re-dial of the selected subscriber number.
